# FASCICULE DE BREVET EUROPEEN

(11) **EP 0 484 198 B1**
(45) Date de publication et mention de la délivrance du brevet: **03.03.1999**
(21) Numéro de dépôt: 91402792.5
(22) Date de dépôt: 21.10.1991
(51) Int. Cl.: G07F 7/08, G07F 7/10

(54) **Terminaux de paiement portables et réseau de tels terminaux**
Tragbare Bezahlterminals und Netzwerk solcher Terminals
Portable payment terminals and network of such terminals

(30) Priorité: 30.10.1990 FR 9013449
(43) Date de publication de la demande: 06.05.1992
(73) Titulaire: SOCIETE D'APPLICATIONS GENERALES D'ELECTRICITE ET DE MECANIQUE SAGEM, 75783 Paris Cédex 16 (FR)
(72) Inventeur: Sarradin, Jean-Louis, F-95190 Fontenay-en-Parisis (FR)
(74) Mandataire: Bloch, Gérard

(56) Documents cités:
- EP-A- 0 079 047
- EP-A- 0 159 539
- EP-A- 0 168 836
- WO-A-85/04035
- WO-A-90/03016
- WO-A-90/04239
- GB-A- 2 192 665
- US-A- 3 727 186
- US-A- 4 482 802
- US-A- 4 601 011
- US-A- 4 947 028
- L'Echo des Recherches nr. 134, 4e trimestre 1988, pages 15-24, P. Rémery et al.

## Description

Un terminal de paiement est utilisé en monétique pour effectuer une transaction entre un commerçant ou tout autre professionnel, détenteur du terminal, et un client, porteur d'un support de paiement, comme une carte bancaire, à mémoire ou à piste magnétique, ou un chèque, et qui, pour valider la transaction, peut saisir sur le terminal un code confidentiel qui lui est propre après que le détenteur du terminal ait notamment saisi le montant de la transaction. Un tel terminal étant considéré comme esclave, la transaction peut être ensuite transmise à un maître qui la retransmet, par le réseau téléphonique commuté RTC ou un réseau spécialisé, comme le réseau TRANSPAC, à un centre de traitement commercants CTC.

On connait déjà, par exemple par le document US-A-4 601 011, des terminaux de paiement comportant, chacun, un module de saisie et un module de communication, reliés par câbles à un poste central et organisés en système grappé - les modules de communication de tous les terminaux sont reliés au poste central par un même bus - ou en système concentré - les modules de communication des terminaux sont reliés individuellement au poste central -. Ces systèmes câblés présentent le double inconvénient de comprendre des terminaux non portables, dont la position est figée, et d'avoir à tirer des câbles, ce qui est vraiment un inconvénient quand un tel système câblé doit être implanté en un lieu de vente déjà installé ou que le point d'encaissement doit être déplacé.

La nécessité de disposer de terminaux de paiement portables est évidente pour certains professionnels soucieux de ne pas exiger de leurs clients qu'ils se déplacent pour saisir leur code confidentiel. On peut citer notamment les restaurateurs. Pour ne considérer que ces derniers, il est éminemment préférable que les serveurs du restaurant présentent le terminal à un client sur la table de restaurant plutôt que de lui demander de se déplacer à la caisse.

On connait aussi des terminaux de paiement portables comportant un module de saisie et une interface de communication par signaux infra-rouge avec un poste central servant en fait de socle, ou base, fonctionnel pour chaque terminal. Chaque terminal est alimenté de façon autonome par batterie et stocke temporairement les transactions avant de les transférer dans la mémoire de stockage de la base pour transmission subséquente à un centre CTC. Ces terminaux, certes mobiles, présentent toutefois aussi deux inconvénients. La communication entre eux et leur base associée, bien que réalisée par signaux infra-rouge, n'est autorisée que si ils sont posés sur la base, condition préalable à l'initialisation de la transmission infra-rouge. De cet inconvénient de l'initialisation mécanique découle le second, selon lequel, ces terminaux étant isolés de leur base lors des transactions, l'interrogation par eux pour demande d'autorisation de transaction, par exemple, est impossible. Le document EP-A-168 836 enseigne un terminal de ce dernier type, mais qui n'est ni portable, ni mobile. Plus précisément, le terminal de ce document n'assure qu'une partie des fonctions nécessaires à la transaction, les autres fonctions étant assurées par le support de paiement. Le terminal de ce document interdit tout emploi des cartes bancaires actuelles.

La présente invention vise donc à proposer un terminal de paiement portable permettant au cours des transactions une communication avec le poste central et ne présentant pas les inconvénients des terminaux des systèmes câblés.

A cet effet, la présente invention concerne un terminal de paiement portable comprenant des moyens de saisie de données de transaction, une interface de communication sans fil avec un poste central distant, relié à un centre de traitement, et à initialisation électronique et des moyens pour, en cours de transaction, communiquer avec le poste central et lui adresser une demande de vérification d'éventuelles transactions préalables.

Certes, US-A-4 947 028 enseigne un terminal de paiement comportant des moyens de saisie de données de transaction, une interface de communication sans fil avec un poste central distant et à initialisation électronique et des moyens pour communiquer avec le poste central en cours de transaction.

Comme liaison sans fil entre le terminal de l'invention et son poste central associé, on peut proposer par exemple une liaison infra-rouge, une liaison par ondes hertziennes, etc.

Le terminal de l'invention peut être relié au poste central selon un mode en ligne (on line) ou selon un mode hors ligne (off line).

Dans le premier cas du mode on line, les transactions ne sont pas stockées dans le terminal mais transférées au poste central en présence des clients. Elles impliquent une requête du terminal au poste central puis une réponse du poste central au terminal pour les finir et les valider. Les transactions peuvent être précédées d'une demande d'autorisation de transaction qui se déroule comme suit : le terminal adresse une requête au poste central qui la transmet à un centre d'autorisation CA, régional ou national, avant que le terminal ne reçoive la réponse du poste central. Les échanges entre le poste central et le centre d'autorisation s'effectuent selon les spécifications bien connues du Groupement des cartes bancaires GCB.

Toujours dans le cas du mode on line, il peut être vérifié, au cours d'une transaction, si le porteur du support de paiement a auparavant procédé à d'autres transactions à d'autres points de transaction, équipés aussi d'un terminal, sur un même lieu de vente, puisque le poste central du lieu de vente considéré, auquel sont reliés tous les terminaux portables, stocke toutes les transactions de tous les terminaux portables qui lui sont associés. Cette vérification d'éventuelles transactions préalables s'effectue par comparaison, dans le poste central, avec toutes les transactions stockées. Il s'agit d'une des vérifications effectuées par le poste central sur requête du terminal avant validation de la transaction et réponse du poste central au terminal.

Dans le second cas du mode off line, chaque terminal stocke ses transactions pour ne les transférer au poste central par exemple qu'une fois par jour avant télécollecte par le centre CTC. Une fois par jour également, le poste central transfère aux terminaux portables la liste des numéros opposés (dressée à la suite de pertes, vol et abus).

On remarquera qu'en mode off line, puisque les transactions ne sont pas tout de suite transférées au poste central, la vérification d'éventuelles transactions préalables par un même porteur à d'autres terminaux portables reliés au même poste central n'est pas possible.

Le mode on line est bien approprié aux réseaux privés du type de ceux qui sont implantés sur les lieux de vente dits "grandes surfaces" et dans les restaurants. Le mode off line est bien approprié aux réseaux public de type radiotéléphonie, par exemple de la marque Pointel de la société France Télécom basé sur la spécification britannique MPT 1325 "Common Air Interface", mai 1989. Le réseau Pointel comporte un poste central et un réseau de bornes publiques fixes relais auxquelles sont associés des terminaux mobiles, sous forme de combinés personnalisés, qui, dans un rayon donné, par exemple de 200 m, autour des bornes, permettent de communiquer avec le poste central. Mais, ladite spécification peut également être utilisée pour un réseau privé avec des terminaux on line.

La demanderesse entend également revendiquer un réseau de plusieurs terminaux comme celui de l'invention.

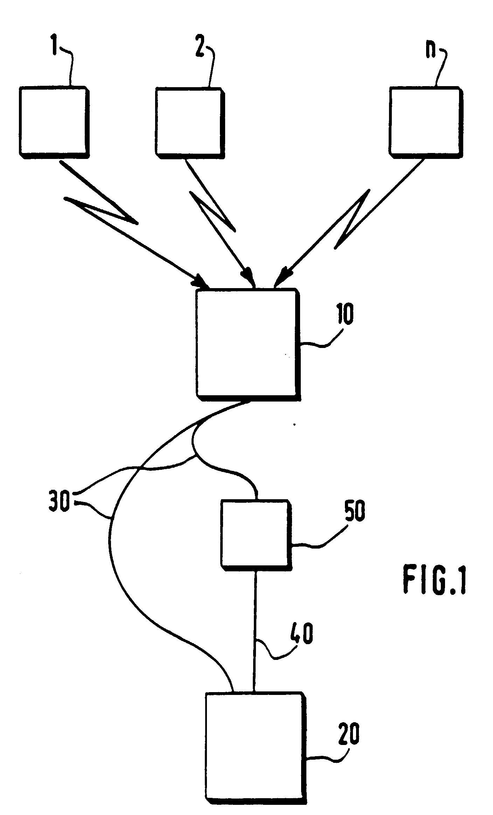

L'invention sera mieux comprise à l'aide de la description suivante des formes de réalisation préférées d'un terminal de paiement portable de l'invention et du poste central associé, en référence au dessin annexé, sur lequel
- la figure 1 est un schéma du système dans lequel s'insère le terminal;
- la figure 2 est une représentation schématique du terminal et
- la figure 3 est une représentation schématique du poste central.

Le terminal 1 qui va être décrit fait partie d'une série de terminaux identiques 1, 2 ...n n reliés par liaison radio, de type téléphonique, à un poste central 10 lui-même relié ici à un "centre de traitement commerçants" CTC 20. La liaison entre le poste central 10 et le centre CTC peut s'effectuer soit par le réseau téléphonique commuté RTC 30, soit par un réseau spécialisé 40, par exemple du type TRANSPAC, lui-même encore relié au réseau RTC par une interface PAD 50. Il s'agit donc ici d'une configuration dite concentrée.

Le terminal 1 comporte, autour d'un microprocesseur 70, un afficheur 71, un clavier 72, une batterie d'alimentation 73, un module 74 de traitement de cartes à mémoire, un module 75 de lecture de la piste magnétique de cartes magnétiques, une mémoire de programme 76, une mémoire de transactions 77, un module d'entrées-sorties 78 et une interface 79 de communication avec le poste central 10.

En mode off line, la mémoire de transactions 77, qui est ici une mémoire RAM sauvegardée, stocke les transactions et la liste des numéros opposés. En mode on line, la mémoire 77 est une mémoire de travail pour chaque transaction en cours et qui, selon le programme de la mémoire 76, peut éventuellement stocker la transaction précédente pour pouvoir fournir un double de facturette sans avoir à adresser une requête à cet effet au poste central.

La mémoire de programme 76 peut être une mémoire PROM, avec programme figé, ou une mémoire flash PROM ou une mémoire RAM sauvegardée, avec un programme téléchargeable depuis le poste central.

L'interface 79 permet une liaison hertzienne avec le poste central 10, initialisée électroniquement de façon classique, soit depuis le terminal lui-même, soit depuis le poste central.

Le microprocesseur 70, la mémoire de programme 76 et la mémoire de transactions 77 constituent, avec l'interface 79, les moyens de communication avec le poste central 10. Le clavier 72, le microprocesseur 70 et les mémoires 76, 77 constituent les moyens de saisie de données de transaction.

Le module d'entrées-sorties 78 permet de raccorder au terminal des périphériques comme une caisse enregistreuse, un lecteur de chèques.

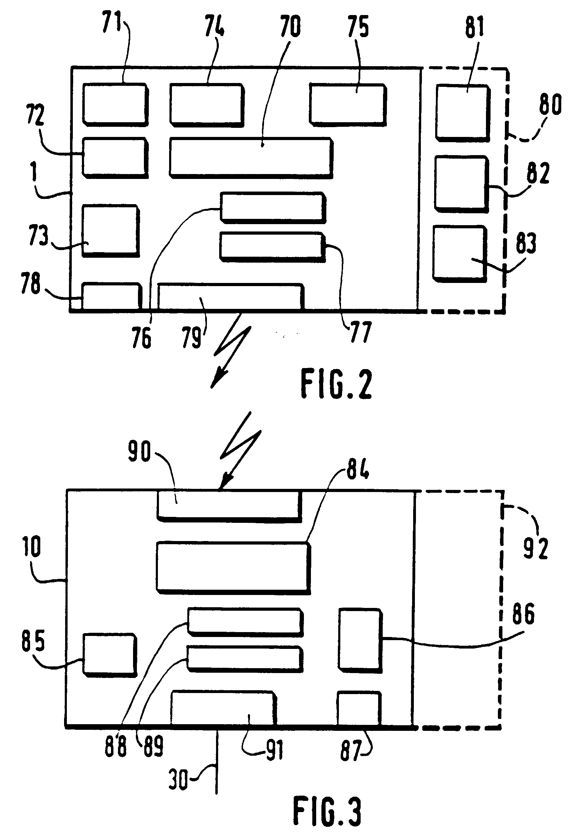

En option, tel que représenté en tirets sur la figure 2, au terminal 1 peut être associé un boîtier supplémentaire 80 intégrant une imprimante de tickets 81, avec sa batterie 82, et éventuellement un module 83 de traitement de chèques.

On notera que le terminal 1 pourrait aussi être alimenté directement à partir du secteur.

Le poste central 10 comporte, autour d'un microprocesseur 84, un bloc d'alimentation 85, un horodateur 86, un module 87 d'entrées-sorties de périphériques, une mémoire de programme 88, une mémoire de stockage 89, une interface 90 de communication avec le terminal 1 et les autres terminaux du réseau et un modem 91 de liaison avec le réseau RTC.

Le poste central gère tous les terminaux portables qui lui sont associés. Il peut y en avoir par exemple une vingtaine. Les fonctions de gestion permettent la mise en oeuvre, notamment, du transfert, depuis des terminaux, des transactions, une à une ou globalement, des demandes d'autorisation de transaction, des vérifications d'éventuelles transactions préalables, mais en mode on line uniquement, requises par le terminal 1 à l'aide de son microprocesseur 70 et de ses mémoires 76, 77. Pour le centre CTC, c'est le poste central qui assure la télécollecte des transactions. C'est encore le poste central qui reçoit, pour l'ensemble du réseau, la liste des numéros opposés pour, en mode off line, la transmettre aux terminaux.

On notera que le bloc d'alimentation 85 du poste central peut aussi servir à charger la batterie (73) des terminaux.

Tout comme pour les terminaux, au poste central 10 peut être associé en option un boîtier supplémentaire 92 intégrant par exemple une imprimante de journal.

Le module d'entrées-sorties permet de raccorder au poste central, par exemple, une caisse centrale, un lecteur de chèques, un ordinateur personnel PC.

## Revendications

1. Terminal de paiement portable comportant des moyens de saisie de données de transaction (70, 72, 76, 77), une interface (79) de communication sans fil avec un poste central distant (10) et à initialisation électronique et des moyens (70, 76, 77, 79) agencés pour, en cours de transaction, communiquer avec le poste central (10) et lui adresser une demande de vérification d'éventuelles transactions préalables.

2. Terminal selon la revendication 1, dans lequel l'interface (79) est agencée pour communiquer avec le poste central (10) par ondes hertziennes.

3. Terminal selon l'une des revendications 1 et 2, dans lequel la liaison avec le poste central (10) s'effectue en mode "on line".

4. Terminal selon la revendication 3, dans lequel il est prévu des moyens (76, 77) pour stocker la transaction précédant celle en cours.

5. Réseau de plusieurs terminaux de paiement portables (1, 2...n) selon la revendication 1.

## Patentansprüche

1. Tragbares Zahlterminal, enthaltend Mittel (70, 72, 76, 77) zum Erfassen von Transaktionsdaten, eine Schnittstelle (79) zur drahtlosen Kommunikation mit einer entfernten Zentralstation (10) und mit elektronischen Initialisierung und Mittel (70, 76, 77, 79), die so ausgebildet sind, daß sie mit der Zentralstation während der Transaktion kommunizieren und an sie eine Anfrage zum Überprüfen eventueller vorhergehender Transaktionen richten.

2. Terminal nach Anspruch 1, wobei die Schnittstelle (79) derart ausgebildet ist, daß sie mit der Zentralstation (10) durch hertzsche Wellen kommuniziert.

3. Terminal nach Anspruch 1 oder 2, wobei die Verbindung mit dem Zentralgerät (10) im "on-line"-Modus erfolgt.

4. Terminal nach Anspruch 3, wobei Mittel (76,77) zum Speichern der der ablaufenden Transaktion vorhergehenden Transaktion vorgesehen sind.

5. Netz von mehreren tragbaren Zahlterminals (1, 2..,n) nach Anspruch 1.

## Claims

1. Portable payment terminal comprising means for inputting transaction data (70, 72, 76, 77), an interface (79) for wireless communication with a remote central station (10) and initiated electronically and means (70, 76, 77, 79) arranged in order, during the transaction, to communicate with the central station (10) and to send it a request for verification of possible previous transactions.

2. Terminal according to claim 1, wherein the interface (79) is arranged to communicate with the central station (10) by hertzian waves.

3. Terminal according to one of claims 1 and 2, wherein the connection with the central station (10) is effected in "on line" mode.

4. Terminal according to claim 3, wherein means (76, 77) are provided to store the transaction preceding the one taking place.

5. Network of a plurality of portable payment terminals (1, 2...n) according to claim 1.
